# EUROPÄISCHE PATENTSCHRIFT

(11) **EP 4 343 480 B1**
(45) Veröffentlichungstag und Bekanntmachung des Hinweises auf die Patenterteilung: **29.10.2025**
(21) Anmeldenummer: 22196756.5
(22) Anmeldetag: 21.09.2022
(51) Int. Cl.: G05D 1/241, A47L 9/28, A47L 11/40, G05D 109/10

(54) **SELBSTTÄTIG VERFAHRBARES BODENBEARBEITUNGSGERÄT MIT EINER HINDERNISDETEKTIONSEINRICHTUNG AUFWEISEND EINEN STOSSFÄNGER UND MINDESTENS EINEN STOSSSENSOR**
AUTOMATICALLY MOVEABLE SOIL WORKING DEVICE WITH AN OBSTACLE DETECTION DEVICE COMPRISING A BUMPER AND AT LEAST ONE IMPACT SENSOR
APPAREIL DE TRAITEMENT DU SOL À DÉPLACEMENT AUTOMATIQUE DOTÉ D'UN DISPOSITIF DE DÉTECTION D'OBSTACLES COMPRENANT UN PARE-CHOCS ET AU MOINS UN CAPTEUR D'IMPACT

(43) Veröffentlichungstag der Anmeldung: 27.03.2024
(73) Patentinhaber: Vorwerk & Co. Interholding GmbH, 42275 Wuppertal (DE)
(72) Erfinder: Schönhoff, Helmut, 42897 Remscheid (DE); Vahldiek, Utz, 58332 Schwelm (DE)
(74) Vertreter: Müller, Enno

(56) Entgegenhaltungen:
- DE-A1- 102008 061 259
- JP-A- 2007 330 567
- US-A1- 2005 055 792
- US-A1- 2017 181 591

## Beschreibung

### Gebiet der Technik

Die Erfindung betrifft ein selbsttätig verfahrbares Bodenbearbeitungsgerät mit einem Grundkörper, einer Antriebseinrichtung und einer Hindernisdetektionseinrichtung zur Detektion einer Kollision des Bodenbearbeitungsgerätes mit einem Hindernis, nach den Merkmalen des Oberbegriffs des Anspruches 1.

### Stand der Technik

Selbsttätig verfahrbare Bodenbearbeitungsgeräte der vorgenannten Art sind im Stand der Technik hinreichend bekannt. Diese verfügen insbesondere über eine Navigationseinrichtung, welche der Navigation und Selbstlokalisierung des Bodenbearbeitungsgerätes innerhalb einer Umgebung dient. Die Navigationseinrichtung kann beispielsweise eine berührungslose Abstandsmesseinrichtung aufweisen, welche Abstände zu Hindernissen misst. Anhand der gemessenen Abstände wird eine Umgebungskarte erstellt, in welcher Hindernisdaten gespeichert werden. Die Umgebungskarte dient dem Bodenbearbeitungsgerät anschließend zur Navigation und Selbstlokalisierung.

Darüber hinaus verfügen bekannte Bodenbearbeitungsgeräte über einen Stoßfänger, auch Bumper genannt, welcher in Vorstandslage an einem Grundkörper des Bodenbearbeitungsgerätes angeordnet ist und sich bei Kontakt mit einem Hindernis relativ zu dem Grundkörper verlagert. Dem Stoßfänger ist mindestens ein Stoßsensor zugeordnet, welcher die Verlagerung des Stoßfängers detektiert.

Weiter ist es bekannt, den Stoßfänger U-förmig an einer Außenkontur des Grundkörpers des Bodenbearbeitungsgerätes anzuordnen, wobei der Stoßfänger im Wesentlichen dem Grundriss des Bodenbearbeitungsgerätes folgt. Durch die U-Form ergeben sich somit ein Stoßfängerbereich, welcher einer Grundkörperfront zugeordnet ist, und Stoßfängerbereiche, welche zumindest Teilbereichen zweier gegenüberliegender Grundkörperseiten zugeordnet sind. Dadurch ist es möglich, sowohl frontale, als auch seitliche Kollisionen mit Hindernissen zu detektieren.

Aus der DE 10 2013 107 160 A1 ist beispielsweise ein selbsttätig verfahrbares Bodenreinigungsgerät bekannt, bei welchem ein Tasterelement mittels eines Linearlagers an dem Gerät angeordnet ist. Darüber hinaus besteht das Tasterelement aus einem elastisch rückstellfähigen Werkstoff, so dass eine Beanspruchung des Tasterelementes außerhalb der Bewegungsrichtung des Linearlagers zu einer Verformung des Tasterelementes führen kann, beispielsweise zu einer parallelogrammartigen Verschiebung eines U-Schenkels relativ zu einem U-Steg. Entsprechend werden gegen oder zumindest annähernd gegen die übliche Verfahrrichtung auf das Tasterelement einwirkende Kräfte durch Bewegung zumindest eines U-Schenkels des Tasterelementes erfasst, während quer zur üblichen Verfahrrichtung, d. h. seitlich einwirkende Kräfte zu einer Bauteilverformung desselben führen. Auch eine Kombination aus Verlagerung und Bauteilverformung ist in Abhängigkeit von dem Ort der Krafteinwirkung möglich.

Durch die linear geführte Lagerung des Tasterelementes an dem Grundkörper entstehen je nach Position und Richtung der von außen einwirkenden Kräfte Kippmomente auf das Tasterelement, die zu einer Schiefstellung oder zum Verkanten führen können. Dadurch entstehen erhöhte Reibungskräfte, so dass zur Betätigung des Stoßsensors entsprechend größere Betätigungskräfte erforderlich sind. Stöße auf das Tasterelement können somit unter Umständen nicht optimal durch die Sensorik erkannt werden. Des Weiteren können reduzierte Arbeitshübe resultieren, die durch ungleichmäßige Verlagerung des Tasterelementes relativ zu dem Gerätegrundkörper auftreten. Insgesamt ergibt sich somit eine reduzierte Empfindlichkeit des Stoßsensors.

Aus der JP 2007-330 567 A ist ein selbsttätig verfahrbares Bodenbearbeitungsgerät bekannt, bei welchem der Stoßfänger unmittelbar an dem Grundkörper angebracht ist.

Aus der US 2017/0 181 591 A1 ist ein Reinigungsroboter mit einem Stoßfänger bekannt, bei dem der Stoßfänger mittels eines Gelenkes und an dem Grundgehäuse ausgebildeten Lagerungen an dem Grundgehäuse drehbar gelagert ist. Die Lagerungen an dem Grundgehäuse weisen Langlöcher auf, wodurch der Stoßfänger relativ zu dem Grundkörper schwenkbeweglich ist.

Aus der US 2005/0 055 792 A1 ist ein selbsttätig verfahrbares Bodenbearbeitungsgerät bekannt, bei welchem ein Stoßfänger mittels Schwenkarmen unmittelbar an dem Grundkörper angebracht ist.

Schließlich ist aus der DE 10 2008 061 259 A1 ein selbsttätig verfahrbares Bodenbearbeitungsgerät bekannt, bei welchem der Stoßfänger über eine Vernietung wippenartig an dem Grundkörper angebracht ist. Ein zeigerartig in das Chassis einragender T-Schenkel eines T-Elementes dient als Taster, um die Bewegung des Stoßfängers zu erfassen.

### Zusammenfassung der Erfindung

Ausgehend etwa von dem aus der JP 2007-330 567 A bekannten Stand der Technik ist es Aufgabe der Erfindung, ein Bodenbearbeitungsgerät mit einer Hindernisdetektionseinrichtung auszubilden, welche unabhängig von einer Position und Richtung von außen einwirkender Stoßkräfte zuverlässig funktioniert und eine optimale Sensorempfindlichkeit aufweist.

Zur Lösung der vorgenannten Aufgabe ist vorgesehen, dass der Stoßfänger über einen eine Aussparung zur Aufnahme des Drehgelenks aufweisenden Trägerkörper an dem Grundkörper angeordnet ist und dass das Drehgelenk unter Zwischenanordnung des Trägerkörpers mit dem Grundkörper verbunden ist, wobei ein, einen ersten Anschlussbereich des Drehgelenks mit dem Grundkörper verbindendes Verbindungsmittel gleichzeitig den Trägerkörper mit dem Grundkörper verbindet.

Der Stoßfänger ist - entgegen dem vielfachen Stand der Technik - nicht mit Lagern zur Parallelführung an dem Grundkörper angeordnet, sondern vielmehr über ein Drehgelenk an dem Grundkörper gelagert. Durch die kippsteife und reibungsarme Lagerung über das Drehgelenk ist es ausreichend, einen oder mehrere Stoßsensoren in lediglich einer einzigen Ebene anzuordnen, um Stöße auf alle Ebenen des Stoßfängers mit ausreichender Empfindlichkeit detektieren zu können. Durch die Verwendung eines Drehgelenks resultiert eine gleichmäßige Bewegung in den verschiedenen Ebenen des Drehgelenks, so dass die Arbeitshübe einheitlich sind und Kollisionen mit Hindernissen unabhängig von einer Position und Richtung der einwirkenden Kraft mit gleicher Empfindlichkeit detektiert werden können. Zudem ist es zur Detektion von Querstößen, quer zu einer üblichen Fortbewegungsrichtung des Bodenbearbeitungsgerätes, nicht erforderlich - oder sogar nachteilig - den Stoßfänger aus einem elastisch rückstellfähigen Werkstoff auszubilden. Vielmehr empfiehlt sich im Sinne der Erfindung ein Material mit hohem Härtegrad, um die Funktionsweise der Hindernisdetektionseinrichtung zu unterstützen und die Kippsteifigkeit des Drehgelenks sinnvoll zu ergänzen. Nicht zuletzt reduziert sich durch die Verwendung eines Drehgelenks auch der Bauraumbedarf für die Mechanik bzw. Lagerung des Stoßfängers. Besonders vorteilhaft ist es, die Länge einer Gelenkachse des Drehgelenks im Wesentlichen so groß wie die Höhe des Stoßfängers auszubilden.

Das Drehgelenk weist eine Gelenkachse auf, welche in einem auf einer zu bearbeitenden Fläche fahrenden Zustand des Bodenbearbeitungsgerätes im Wesentlichen senkrecht zu der Fläche orientiert ist. Durch die im Wesentlichen vertikale Orientierung der Gelenkachse des Drehgelenkes kann der Stoßfänger parallel zu der Fläche, auf welcher das Bodenbearbeitungsgerät fährt oder steht, verlagert werden, während senkrecht dazu, d. h. in Richtung der Längserstreckung der Gelenkachse, kein Freiheitsgrad gegeben ist. Insgesamt ergibt sich somit eine Beweglichkeit des Stoßfängers in einer Ebene parallel zu der Fortbewegungsrichtung des Bodenbearbeitungsgerätes, wobei sich auch Richtungsanteile in Fortbewegungsrichtung und Querrichtung zu einem resultierenden Vektor in dieser Ebene addieren können. Die Beweglichkeit des Stoßfängers mit Hilfe des Drehgelenks beträgt in Fortbewegungsrichtung bzw. quer dazu (in derselben horizontalen Ebene des Bodenbearbeitungsgerätes) bevorzugt mindestens 5 mm. Gleiches gilt für den resultierenden Vektor in Diagonalrichtung. Der Stoßfänger benötigt neben den relativ kleinen axialen Auflageflächen des Drehgelenks keine weiteren horizontalen Stützflächen, um den Stoßfänger in senkrechter Lage zu positionieren. Die Kräfte im Lastfall (Kippmomente) werden überwiegend über die radialen Lagerflächen des Drehgelenks in den Grundkörper des Bodenbearbeitungsgerätes geleitet. Dadurch ergeben sich günstige Gleitlagerverhältnisse auf kleinen Wirkdurchmessern, die durch die Verwendung von Standardelementen einfach realisiert werden können und keine besondere Präzision erfordern.

Das Drehgelenk weist weiter zwei bezogen auf die Gelenkachse radial gegenüberliegende Anschlussbereiche auf, von welchen ein erster Anschlussbereich drehbar an dem Grundkörper angeordnet ist und von welchen ein zweiter Anschlussbereich drehbar an dem Stoßfänger angeordnet ist. Zusätzlich zu der Beweglichkeit des Stoßfängers über die Gelenkachse des Drehgelenks ergeben sich somit an dem Drehgelenk zwei weitere Rotationsachsen, um welche der Stoßfänger bewegt werden kann. Insgesamt ist der Stoßfänger dadurch über drei Rotationsachsen an dem Grundkörper gelagert und relativ zu diesem verlagerbar. Die Rotationsbewegungen erfolgen dabei in nur einer einzigen horizontalen Ebene, vorzugsweise parallel zu der zu bearbeitenden Fläche, auf welcher sich das Bodenbearbeitungsgerät fortbewegt. Die Rotationsachsen des Drehgelenks und deren Anschlussbereiche sind so angeordnet, dass diese nicht entlang einer einzigen Linie positioniert werden können. Dies bedeutet, dass eine gestreckte Lage mit drei auf einer Linie befindlichen Rotationsachsen im Rahmen des Bewegungsspielraums nicht möglich ist. Damit sind nur eindeutige Winkellagen des Stoßfängers möglich, die nur eindeutige Detektionssignale des Stoßsensors innerhalb dessen Arbeitsbereiches zulassen. Das Lagerungssystem besteht somit im Wesentlichen aus drei Teilbereichen, die durch jeweils eine Rotationsachse verbunden sind, nämlich dem feststehenden Grundkörper des Bodenbearbeitungsgerätes, dem über eine erste Rotationsachse und den ersten Anschlussbereich drehbar mit dem Grundkörper verbundenen Drehgelenk und dem über eine zweite Rotationsachse und den zweiten Anschlussbereich des Drehgelenks verbundenen Stoßfänger, welcher auf den mindestens einen Stoßsensor einwirkt.

In diesem Zusammenhang kann insbesondere vorgesehen sein, dass der jeweilige Anschlussbereich über ein, eine Rotationsachse bildendes Verbindungsmittel mit dem Grundkörper oder dem Stoßfänger verbunden ist, wobei das Verbindungsmittel parallel zu der Gelenkachse des Drehgelenks orientiert ist. Die vorgeschlagenen Verbindungsmittel dienen dabei zum einen der Befestigung des Drehgelenks an einerseits dem Grundkörper und andererseits dem Stoßfänger, und zum anderen der Bereitstellung von zwei weiteren Rotationsachsen für die Beweglichkeit des Stoßfängers zusätzlich zu der Gelenkachse des Drehgelenks, so dass der Stoßfänger insgesamt über drei Rotationsachsen an dem Grundkörper gelagert ist. Die Verbindungsmittel sind vorschlagsgemäß parallel zu der Gelenkachse des Drehgelenks orientiert, jedoch so, dass eine Anordnung dieser drei Gelenke auf einer einzigen Linie nicht möglich ist. Eine Verlagerung einer oder mehrerer der Rotationsachsen in Richtung einer Längserstreckung ist gesperrt. Der Stoßfänger kann somit im Wesentlichen nur parallel zu einer Fläche, auf welcher sich das Bodenbearbeitungsgerät bewegt, und nur in einer einzigen Ebene verlagert werden. Damit ist die zuvor beschriebene Kippsteifigkeit der Lagerung des Stoßfängers zuverlässig erreicht.

Es wird vorgeschlagen, dass das Verbindungsmittel eine Schraube, ein Zylinderstift oder ein Niet ist. Derartige Verbindungsmittel mit einer relativ zu einem Querschnittsmaß großen Längserstreckung eignen sich insbesondere zur Bereitstellung einer Rotationsachse bei gleichzeitiger Befestigung des Drehgelenks bzw. der Anschlussbereiche an dem Grundkörper bzw. dem Stoßfänger.

Der Stoßfänger ist über einen Trägerkörper an dem Grundkörper angeordnet. Das Bodenbearbeitungsgerät bzw. dessen Grundkörper weist somit einen Trägerkörper auf, an welchem der Stoßfänger angeordnet wird und welcher den Stoßfänger über das Drehgelenk beweglich lagert. Der Trägerkörper selbst ist bevorzugt fest mit dem Grundkörper verbunden. Der Trägerkörper kann mehrere Funktionen erfüllen, welche über die bloße Lagerung des Stoßfängers an dem Grundkörper hinausgehen. Zum einen ist über den Trägerkörper die Betätigung des mindestens einen Stoßsensors möglich, zum anderen kann der Trägerkörper auch Teilbereiche des Drehgelenks aufnehmen. Besonders bevorzugt weist der Trägerkörper, wie auch der Stoßfänger selbst, eine Form auf, die dem Grundriss des Grundkörpers, insbesondere dem in Fortbewegungsrichtung nach vorne weisenden Grundrissabschnitt des Grundkörpers, angepasst ist. Besonders bevorzugt weist der Trägerkörper einen im Wesentlichen U-förmigen Schnitt auf. Es ergeben sich somit Teilbereiche des Trägerkörpers, die neben einem in Fortbewegungsrichtung nach vorne weisenden Frontbereich auch relativ dazu seitliche Teilbereiche umfassen. Durch die U-förmige Grundrissgestaltung des Trägerkörpers entstehen ein sich bevorzugt quer zur üblichen Fortbewegungsrichtung des Bodenbearbeitungsgerätes erstreckender U-Steg, welcher weiter bevorzugt über eine gesamte quer zu der üblichen Fortbewegungsrichtung betrachtete Breite des Grundkörpers ausgebildet ist, und zwei sich jeweils endseitig an den U-Steg anschließende, im Wesentlichen parallel zu der Fortbewegungsrichtung ausgerichtete U-Schenkel. Der U-Steg ist mit den U-Schenkeln unter Ausbildung jeweils eines Eckbereiches verbunden.

Insbesondere wird vorgeschlagen, dass der Trägerkörper eine Aussparung zur Aufnahme des Drehgelenks aufweist. Insbesondere kann die Aussparung bei mit dem Trägerkörper verbundenem Stoßfänger durch den Stoßfänger begrenzt sein. Bevorzugt befindet sich die Aussparung des Trägerkörpers an den Eckbereichen, an welchen sich die U-Schenkel mit dem U-Steg eines U-förmigen Trägerkörpers treffen. Jedem Eckbereich des U-förmigen Trägerkörpers ist somit eine Aussparung zugeordnet, in welcher jeweils ein Drehgelenk aufweiter auf Seite 8, oben der ursprünglich eingereichten Unterlagen genommen werden kann und durch welche hindurch das Drehgelenk einerseits mit dem Grundkörper und andererseits mit dem Stoßfänger verbunden werden kann. Die Aussparung kann bezogen auf einen Schnitt parallel zu einer Fortbewegungsebene des Bodenbearbeitungsgerätes bevorzugt einen dreieckigen Querschnitt aufweisen, wobei eine erste Wandung der Aussparung durch das Material des U-Stegs gebildet ist, und wobei eine zweite Wandung durch das Material des angrenzenden U-Schenkels gebildet ist. Die beiden Wandungen sind nicht-parallel zu einander orientiert, so dass sich die Dreiecksform ergibt. Die dritte Seite des so gebildeten Dreiecks steht auf der zu dem Stoßfänger weisenden Seite bevorzugt offen, so dass das Drehgelenk einfach aufgenommen werden kann. Besonders bevorzugt sind die Größe und Form der Aussparung sowie die Größe und Form des Drehgelenks so aufeinander abgestimmt, dass die Aussparung frontseitig von dem Stoßfänger verschlossen werden kann, wenn der Stoßfänger mit dem Drehgelenk und damit auch dem Trägerkörper bzw. dem Grundkörper verbunden ist.

Das Drehgelenk kann unter Zwischenanordnung des Trägerkörpers mit dem Grundkörper verbunden sein, wobei ein, einen ersten Anschlussbereich des Drehgelenks mit dem Grundkörper verbindendes Verbindungsmittel gleichzeitig den Trägerkörper mit dem Grundkörper verbindet. Das Verbindungsmittel, welches das Drehgelenk bzw. dessen ersten Anschlussbereich mit dem Grundkörper verbindet und das Drehgelenk somit an dem Grundkörper lagert, dient somit gleichzeitig auch zur Befestigung des Trägerkörpers an dem Grundkörper.

In diesem Zusammenhang wird des Weiteren vorgeschlagen, dass der Stoßfänger mit Bezug auf eine Horizontalebene des Bodenbearbeitungsgerätes einen Bewegungsabstand zu dem Grundkörper des Bodenbearbeitungsgerätes aufweist. Dies kann durch eine entsprechende Anordnung des Trägerkörpers erreicht werden, wobei der Trägerkörper den Bewegungsspielraum für den Stoßfänger bereitstellt, beispielsweise dadurch, dass der Trägerkörper einen gewissen Abstand zu dem Grundkörper wahrt. Dieser Bewegungsabstand erlaubt die Beweglichkeit des Drehgelenkes und damit die Verlagerung des Stoßfängers in Fortbewegungsrichtung des Bodenbearbeitungsgerätes bzw. in eine Richtung quer dazu. Insbesondere kann der Trägerkörper ausgehend von einer relativ zu dem Grundkörper beabstandeten Ausgangsstellung in eine an den Grundkörper angenäherte Schaltstellung verlagert werden. Zwischen dem Grundkörper und dem Trägerkörper sind dafür bevorzugt Rückstellelemente vorgesehen, welche den Trägerkörper ausgehend von der Schaltstellung zurück in die Ausgangsstellung verlagern, wenn eine von außen wirkende Kraft, welche bei Kollision des Bodenbearbeitungsgerätes mit einem Hindernis auftritt, entfällt. Hierauf wird später noch detailliert eingegangen.

Der Stoßfänger und/oder der Trägerkörper können wie zuvor erläutert bevorzugt U-förmig ausgebildet sein, wobei der Stoßfänger und/oder der Trägerkörper bezogen auf eine übliche Fortbewegungsrichtung des Bodenbearbeitungsgerätes eine Grundkörperfront und zumindest Teilbereiche zweier sich in jeweils einem Eckbereich des Grundkörpers an die Grundkörperfront anschließender Grundkörperseiten umfängt, und wobei jedem Eckbereich des Grundkörpers ein Drehgelenk zugeordnet ist, so dass der Stoßfänger in einer einzigen parallel zu der zu bearbeitenden Fläche orientierten Ebene sowohl parallel zu der üblichen Fortbewegungsrichtung, als auch quer dazu relativ zu dem Grundkörper und/oder dem Trägerkörper verlagerbar ist. Wie zuvor erläutert kann das dem jeweiligen Eckbereich des Grundkörpers zugeordnete Drehgelenk in eine Aussparung des Trägerkörpers aufgenommen sein. Alternativ ist es jedoch aus möglich, sofern kein Trägerkörper verwendet wird, das Drehgelenk unmittelbar an dem Grundkörper anzuordnen.

Schließlich wird vorgeschlagen, dass der Grundkörper, der Stoßfänger und/oder der Trägerkörper mindestens ein Federelement aufweist, dessen Rückstellkraft den Stoßfänger von dem Grundkörper zu beabstanden sucht. Insbesondere empfiehlt es sich, dass das Rückstellsystem für den Stoßfänger an dem Grundkörper angeordnet ist. Das Rückstellsystem kann ein oder mehrere Federelemente aufweisen, wobei sich in etwa eine Gleichverteilung der Federelemente über die Kontur des Grundkörpers empfiehlt, nämlich in demjenigen Bereich, in welchem der Trägerkörper bzw. Stoßfänger bei Verlagerung des Stoßfängers durch Kollision mit einem Hindernis auf den Grundkörper wirkt. Insbesondere wird vorgeschlagen, dass das eine oder die mehreren Federelemente als Druckfedern ausgebildet sind. Das Federelement dient zur Einstellung der Ausgangsstellung des Stoßfängers, bei welcher der Stoßfänger keiner Kraft durch Kollision mit einem Hindernis ausgesetzt ist. Bevorzugt sind auch Federelemente zur seitlichen Zentrierung des Stoßfängers relativ zu dem Grundkörper vorgesehen, beispielsweise zwei seitlich an dem Grundkörper angeordnete Federelemente und drei frontal an dem Grundkörper angeordnete Federelemente. Die drei frontalen Federelemente sind vorzugsweise symmetrisch entlang der Grundkörperfront angeordnet.

Die mechanischen Anschläge für den Stoßfänger in der Ausgangsstellung bzw. Schaltstellung sind bevorzugt nicht in dem Drehgelenk verwirklicht, sondern vielmehr an anderer Stelle des Bodenbearbeitungsgerätes, zum Beispiel an dem Stoßfänger und/oder dem Grundkörper selbst.

Für eine optimale Hindernisdetektion empfiehlt es sich zudem, mehrere Stoßsensoren an dem Grundkörper anzuordnen, insbesondere vier oder mehr Stoßsensoren. Die Stoßsensoren können Kontaktsensoren, optische Sensoren, Magnetsensoren oder kapazitive Sensoren sein. Gemäß einer Ausführung ist ein Kontaktsensor vorgesehen, beispielsweise ein elektronischer Taster, welcher bei Verlagerung des Stoßfängers relativ zu dem Grundkörper bzw. Trägerkörper kontaktiert wird. In weiterer Ausgestaltung kann es sich bei einem Stoßsensor auch um einen induktiven, kapazitiven, magnetischen oder optischen Näherungssensor handeln. Weiter sind auch Lichtschranken, Ultraschallsensoren oder elektromagnetische Näherungsschalter möglich. Die Stoßsensoren bzw. deren Wirkungsfelder greifen insbesondere durch den Trägerkörper hindurch. Ein Wirkungsfeld, zum Beispiel optisches, magnetisches, induktives oder kapazitives Wirkungsfeld, kann den Trägerkörper durchsetzen und somit eine Verlagerung des Stoßfängers innerhalb dieses Wirkungsfeldes und relativ zu dem Trägerkörper bzw. Grundkörper detektieren.

### Kurze Beschreibung der Zeichnungen

Im Folgenden wird die Erfindung anhand von Ausführungsbeispielen näher erläutert. Es zeigen:
- Fig. 1: ein Bodenbearbeitungsgerät in einer dreidimensionalen Darstellung;
- Fig. 2: einen Teilbereich des Bodenbearbeitungsgerätes mit einem Grundkörper, einem Stoßfänger und einem Trägerkörper für den Stoßfänger;
- Fig. 3: einen Schnitt eines Teilbereiches des Bodenbearbeitungsgerätes im Bereich des Stoßfängers;
- Fig. 4: den Grundkörper des Bodenbearbeitungsgerätes;
- Fig. 5: den Trägerkörper des Bodenbearbeitungsgerätes;
- Fig. 6: ein Drehgelenk zur Lagerung des Stoßfängers;
- Fig. 7: das Drehgelenk in einer anderen Ansicht;
- Fig. 8: den Trägerkörper mit daran angeordnetem Drehgelenk;
- Fig. 9: den Stoßfänger von außen;
- Fig. 10: den Stoßfänger von innen mit daran angeordnetem Drehgelenk.

### Beschreibung der Ausführungsformen

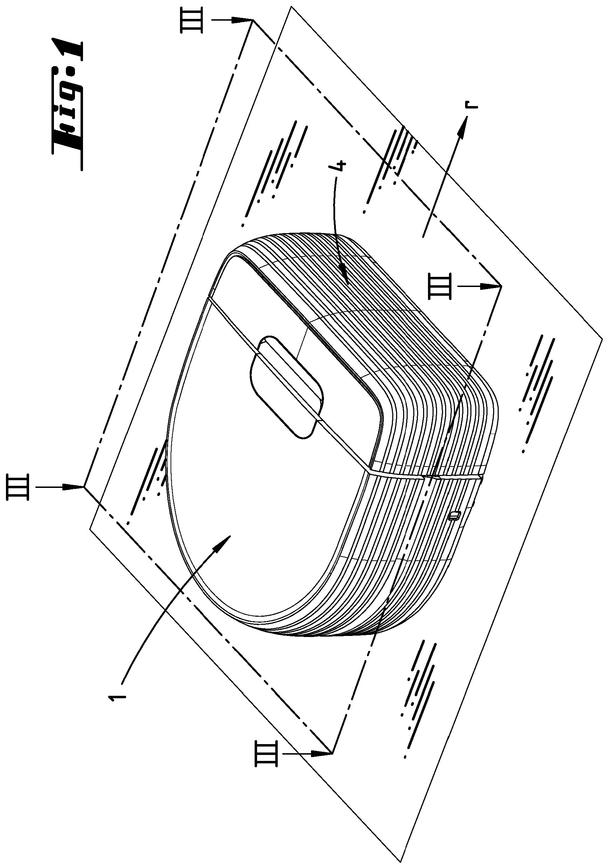

Figur 1 zeigt ein beispielhaftes erfindungsgemäßes Bodenbearbeitungsgerät 1. Das Bodenbearbeitungsgerät 1 ist ein selbsttätig verfahrbares Bodenbearbeitungsgerät 1. Es kann beispielsweise als Reinigungsgerät, Poliergerät, Schleifgerät oder anderes ausgebildet sein. Als Reinigungsgeräte kommen beispielsweise Saugreinigungsgeräte oder Wischreinigungsgeräte in Frage. Das selbsttätig verfahrbare Bodenbearbeitungsgerät 1 verfügt über eine Antriebseinrichtung mit einem Elektromotor und davon angetriebenen Rädern sowie vorzugsweise über eine Navigationseinrichtung, anhand welcher das Bodenbearbeitungsgerät 1 innerhalb einer Umgebung navigieren und sich selbst lokalisieren kann. Die Navigationseinrichtung weist beispielsweise eine berührungslose Abstandsmesseinrichtung auf, mit welcher Abstände zu Hindernissen in der Umgebung gemessen werden können. Die Abstandsmesseinrichtung kann beispielsweise eine optische Messeinrichtung, insbesondere eine Triangulationsmesseinrichtung, sein. Anhand der detektierten Abstandswerte erstellt eine Steuer- und Auswerteeinrichtung des Bodenbearbeitungsgerätes 1 eine Umgebungskarte, mittels welcher sich das Bodenbearbeitungsgerät 1 lokalisieren und navigieren kann. Das Bodenbearbeitungsgerät 1 bewegt sich üblicherweise in eine Fortbewegungsrichtung r durch die Umgebung.

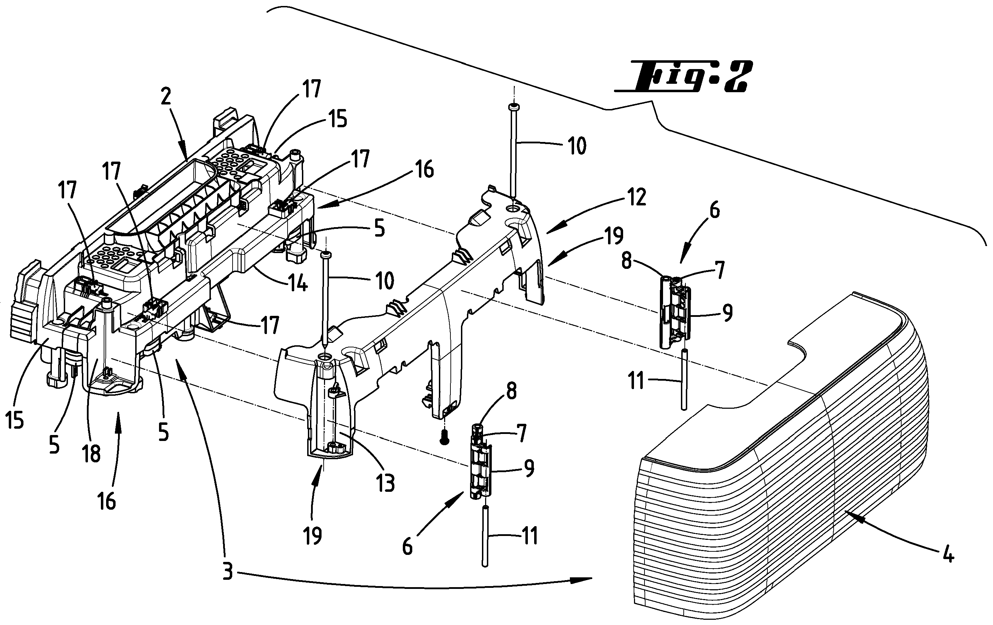

Das Bodenbearbeitungsgerät 1 verfügt gemäß Figur 2 über einen Grundkörper 2 mit einer Hindernisdetektionseinrichtung 3, mittels welcher Kollisionen zwischen dem Bodenbearbeitungsgerät 1 und einem Hindernis der Umgebung detektiert werden können. Die Hindernisdetektionseinrichtung 3 weist einen an dem Grundkörper 2 angeordneten Stoßfänger 4 sowie mindestens einen dem Stoßfänger 4 zugeordneten Stoßsensor 5 auf. Der Stoßfänger 4 ist in einer Vorstandslage an dem Grundkörper 2 angeordnet, so dass dieser in Fortbewegungsrichtung r vorauseilt. Der Stoßfänger 4 weist einen Abstand zu dem Grundkörper 2 auf, so dass sich der Stoßfänger 4 ausgehend von einer Ausgangsstellung in eine Schaltstellung verlagern kann, wenn dieser gegen ein Hindernis prallt. Der mindestens eine, dem Stoßfänger 4 zugeordnete Stoßsensor 5 ist eingerichtet, eine Verlagerung des Stoßfängers 4 zu detektieren, nämlich eine Verlagerung relativ zu dem Grundkörper 2.

Der Stoßsensor 5 kann beispielsweise ein Kontaktsensor, optischer Sensor, induktiver Sensor, Magnetsensor oder kapazitiver Sensor sein. Gemäß der hier gezeigten Ausbildung handelt es sich bei den Stoßsensoren 5 beispielsweise um Kontaktsensoren, die eine Schaltersensorik aus mehreren Schaltelementen bilden und entlang einer Grundkörperfront 14 und zweier Grundkörperseiten 15 des Bodenbearbeitungsgerätes 1 angeordnet sind.

Sofern das Bodenbearbeitungsgerät 1 hier beispielsweise als Saugreinigungsgerät ausgebildet ist, kann dieses unterseitig des Grundkörpers 2 eine oder mehrere Reinigungsbürsten aufweisen, beispielsweise eine um eine Vertikalachse drehende Bürste sowie eine um eine Horizontalachse drehende Bürste. Diese dienen zur Bürstbearbeitung der zu reinigenden Fläche sowie gegebenenfalls zur Reinigung von Übergangsbereichen zwischen einer Bodenfläche und einem angrenzenden Wandbereich. Der durch die Bürste gelöste Schmutz wird bevorzugt einem Saugkanal zugeführt und darüber einer Sauggutkammer, die von einem Nutzer des Bodenbearbeitungsgerätes 1 geleert werden kann. Die im Saugbetrieb in dem Saugkanal strömende Saugluft wird mittels eines in dem Bodenbearbeitungsgerät 1 integrierten Sauggebläses generiert. Zur Energieversorgung des zugeordneten Elektromotors sowie weiterer elektrischer Verbraucher des Bodenbearbeitungsgerätes 1 dient ein Akkumulator.

Das Bodenbearbeitungsgerät 1 weist hier beispielsweise einen Grundriss auf, der sich mit Bezug auf die übliche Fortbewegungsrichtung r aus einem hinteren, halbkreisförmigen Teilbereich und einem vorderen rechteckigen Teilbereich zusammensetzt. Insgesamt ist hierdurch eine quer zu der üblichen Fortbewegungsrichtung r betrachtete Gerätebreite gegeben, die annähernd der in Fortbewegungsrichtung r betrachteten Länge des Bodenbearbeitungsgerätes 1 entspricht. In gegenüberliegenden Eckbereichen 16 des Grundkörpers 2, in welchen die Grundkörperfront 14 in die Grundkörperseiten 15 übergeht, ist der Stoßfänger 4 an dem Grundkörper 2 gelagert, nämlich unter Zwischenanordnung eines Trägerkörpers 12, wie im Folgenden dargestellt wird.

Die Figur 2 zeigt im Einzelnen eine Explosionsdarstellung eines frontalen Teilbereiches des Bodenbearbeitungsgerätes 1 mit dem Grundkörper 2, dem Stoßfänger 4 und dem Trägerkörper 12 zur Lagerung des Stoßfängers 4 an dem Grundkörper 2. Des Weiteren dargestellt sind zwei Drehgelenke 6, welche den Stoßfänger 4 an dem Grundkörper 2 lagern.

Jedes Drehgelenk 6 weist eine Gelenkachse 7 sowie einen ersten Anschlussbereich 8 zur Verbindung mit dem Grundkörper 2 und einen zweiten Anschlussbereich 9 zur Verbindung mit dem Stoßfänger 4 auf. Der erste Anschlussbereich 8 wird mit Hilfe eines Verbindungsmittels 10, welches hier als Schraube ausgebildet ist, unter Zwischenanordnung des Trägerkörpers 12 mit dem Grundkörper 2 verbunden. Der zweite Anschlussbereich 9 wird über ein Verbindungsmittel 11, welches hier als Zylinderstift ausgebildet ist, mit dem Stoßfänger 4 verbunden. Auch andere Verbindungsmittel 11 sind denkbar.

Der mittels des Verbindungsmittels 10 an dem Grundkörper 2 angeordnete Trägerkörper 12 weist Aussparungen 13 zur Aufnahme jeweils eines Drehgelenks 6 auf. Die Aussparungen 13 befinden sich an Eckbereichen 19 des Trägerkörpers 12. Der Grundkörper 2 weist ebenso Aussparungen 18 an seinen Eckbereichen 16 auf, in welche jeweils die zugeordnete Aussparung 13 des Trägerkörpers 12 sowie auch das darin eingesetzte Drehgelenk 6 angeordnet werden können.

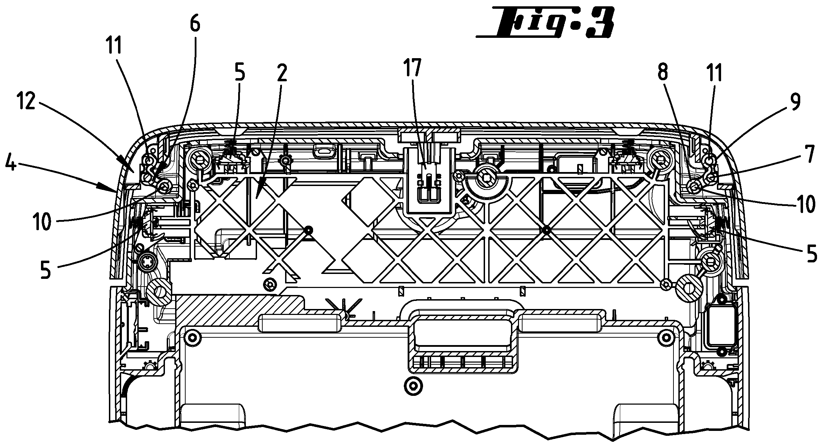

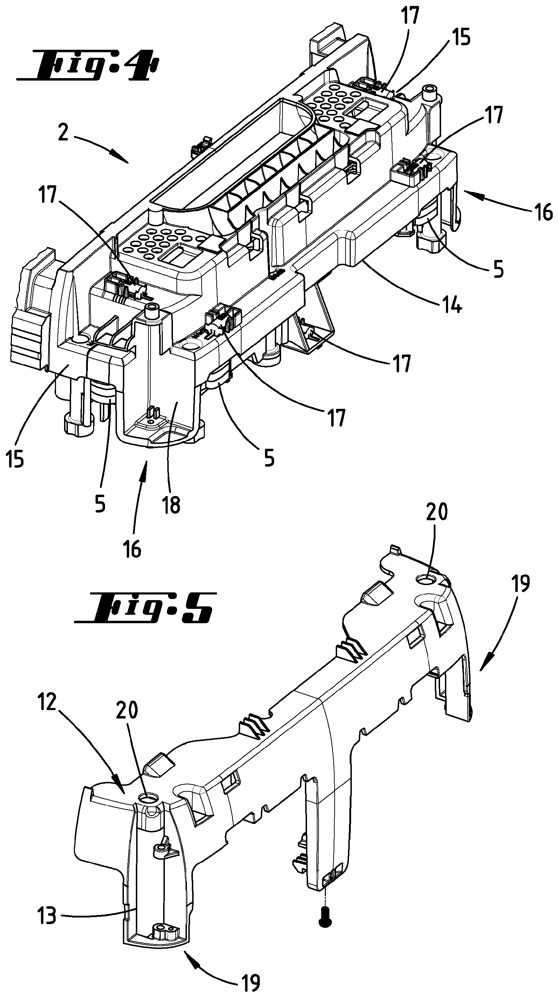

Bei der Montage des Bodenbearbeitungsgerätes 1 werden der Grundkörper 2 und der Trägerkörper 12 über die korrespondierenden Aussparungen 13, 18 zueinander ausgerichtet. Das Drehgelenk 6 wird in die Aussparung 13 des Trägerkörpers 12 und damit auch in die Aussparung 18 des Grundkörpers 2 eingesetzt und über den ersten Anschlussbereich 8 des Drehgelenks 6 mittels des Verbindungsmittels 10 mit dem Grundkörper 2 unter Durchsetzung des Trägerkörpers 12 verbunden. Das Verbindungsmittel 10 bildet dabei eine Rotationsachse, um welche der erste Anschlussbereich 8 des Drehgelenks 6 und damit auch das gesamte Drehgelenk 6 innerhalb der Aussparungen 13, 18 rotieren kann. Der zweite Anschlussbereich 9 des Drehgelenks 6 wird bevorzugt mit einer zu dem Trägerkörper 12 gewandten Innenseite des Stoßfängers 4 verbunden und von dem Verbindungsmittel 11 durchsetzt. Das als Zylinderstift ausgebildete Verbindungsmittel 11 dient als Rotationsachse für das Drehgelenk 6 bzw. den Stoßfänger 4. Die Gelenkachse 7 und die durch die Verbindungsmittel 10, 11 gebildeten Rotationsachsen sind parallel zueinander orientiert und weisen im Wesentlichen eine Länge auf, welche einer Höhe des Trägerkörpers 12 bzw. des Stoßfängers 4 (orthogonal zu einer zu reinigenden Fläche, auf welcher das Bodenbearbeitungsgerät 1 steht oder fährt) entspricht. Insgesamt ergibt sich somit eine Beweglichkeit des Stoßfängers 4 relativ zu dem Grundkörper 2 über drei Rotationsachsen, welche den Verbindungsmitteln 10, 11 und der Gelenkachse 7 des Drehgelenks 6 zugeordnet sind. Zusätzlich zu der Explosionsdarstellung der Figur 2 zeigt Figur 3 einen zusammengebauten Zustand der Einzelteile. Die Figuren 4 bis 10 zeigen darüber hinaus Einzeldarstellungen des Grundkörpers 2, des Trägerkörpers 12, des Stoßfängers 4 sowie des Drehgelenks 6.

Die zuvor beschriebene Lagerung des Stoßfängers 4 mittels des Drehgelenks 7 ermöglicht eine Beweglichkeit des Stoßfängers 4 von bevorzugt mindestens 5 mm in Längsrichtung und Querrichtung des Bodenbearbeitungsgerätes 1 sowie auch diagonal in Richtung eines resultierenden Vektors aus Längs- und Querbewegung, wobei die Bewegungen in derselben Ebene erfolgen. Durch das Drehgelenk 6 ist eine kippsteife Lagerung des Stoßfängers 4 an dem Grundkörper 2 gegeben, so dass Stöße von Hindernissen auf den Stoßfänger 4 in verschiedenen Höhenebenen des Stoßfängers 4 zu einer gleichwertigen Betätigung des Stoßsensors 5 bzw. der mehreren Stoßsensoren 5 führen. Die Ausbildung des Drehgelenks 6 verhindert ein Kippen des Stoßfängers 4 in Richtung der Fläche, auf welcher das Bodenbearbeitungsgerät 1 steht oder verfährt. Dies bedeutet, dass die Gelenkachse 7 sowie auch die Verbindungsmittel 10, 11 stets ihre orthogonale Orientierung relativ zu der Fläche beibehalten. Die Hindernisdetektionseinrichtung 3 kann dadurch einwandfrei arbeiten, auch dann, wenn beispielsweise Stöße auf Teilbereiche des Stoßfängers 4 erfolgen, welche in Höhenebenen über einer Höhenebene des Stoßsensors 5 liegen. Einer Schiefstellung oder einem Verkanten des Stoßfängers 4 an dem Grundkörper 2 ist damit ebenfalls vorgebeugt. Unabhängig von der Position und Richtung der von außen auf den Stoßfänger 4 einwirkenden Stoßkräfte kann ein Stoß auf den Stoßfänger 4 stets sicher mittels der Sensorik erkannt werden.

Mittels des erfindungsgemäßen Drehgelenks 6 ist der Stoßfänger 4 bei Kontakt mit einem Hindernis von einer Ausgangsstellung, in welcher der Stoßfänger 4 um eine festgelegte Distanz von dem Grundkörper 2 bzw. Trägerkörper 12 beabstandet ist, in eine Schaltstellung verlagerbar, bei deren Erreichen der Stoßfänger 4 in den Detektionsbereich der Stoßsensoren 5 gelangt. Sofern es sich bei den Stoßsensoren 5 beispielsweise um Kontaktsensoren handelt, kontaktiert der Stoßfänger 4 die Stoßsensoren 5 in der Schaltstellung. Die Steuer- und Auswerteeinrichtung des Bodenbearbeitungsgerätes 1 erkennt anhand des Detektionssignals der Stoßsensoren 5 den Kontakt des Stoßfängers 4 mit einem Hindernis und löst ein Stoppen und gegebenenfalls Rückwärtsfahren des Bodenbearbeitungsgerätes 1 relativ zu dem Hindernis aus.

Wie insbesondere in Figur 4 erkennbar, sind an dem Grundkörper 2 mehrere Federelemente 17 angeordnet, welche eine Rückstellung des Stoßfängers 4 von der Schaltstellung in die Ausgangsstellung bewirken. Hier sind beispielsweise fünf Federelemente 17 vorgesehen, von welchen drei in Fortbewegungsrichtung r des Bodenbearbeitungsgerätes 1 wirken, und zwei in eine Richtung quer zu der Fortbewegungsrichtung r. Die in Richtung der Grundkörperseiten 15 gewandten Federelemente 17 dienen zudem einer Zentrierung des Stoßfängers 4 an dem Grundkörper 2 bzw. dem daran angeordneten Trägerkörper 12. Die Federelemente 17 sind hier beispielsweise als Druckfedern ausgebildet. Das so gebildete Feder-Rückstellsystem drückt den Stoßfänger 4 in Fortbewegungsrichtung r gegen einen nicht weiter dargestellten mechanischen Anschlag, welcher nicht dem Drehgelenk 6 zugeordnet ist, sondern an anderer Stelle des Systems realisiert ist. Der Stoßfänger 4 benötigt außer den relativ kleinen axialen Auflageflächen des Drehgelenks 6 keine weiteren horizontalen Stützflächen, um den Stoßfänger 4 in vertikaler Lage zu positionieren und Stoßkräfte bzw. Kippmomente aufnehmen zu können. Die Stoßkräfte werden überwiegend über die radialen Lagerflächen des Drehgelenks 6 an den Grundkörper 2 des Bodenbearbeitungsgerätes 1 abgegeben. Dadurch ergeben sich insgesamt günstige Gleitlagerverhältnisse.

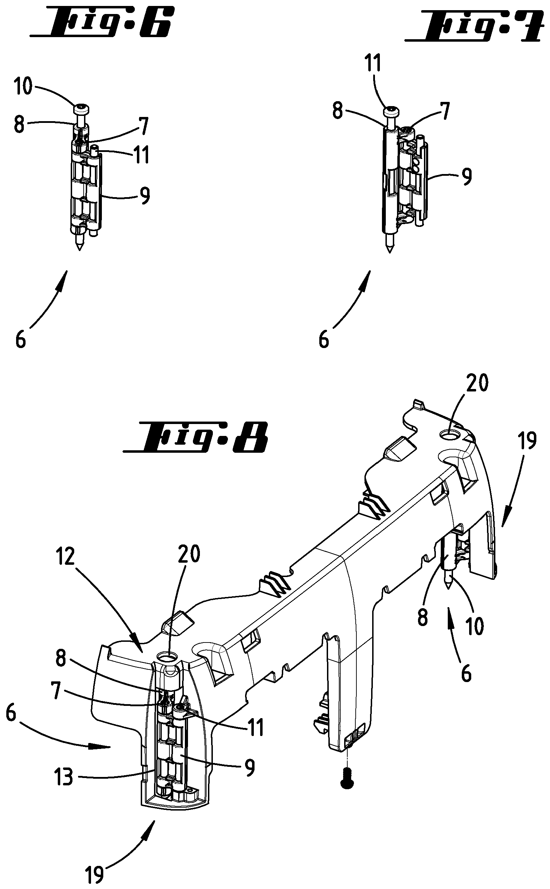

Die Figuren 6 und 7 zeigen das Drehgelenk 6 aus zwei entgegengesetzten Perspektiven. Das Drehgelenk 6 weist wie zuvor erläutert eine zentrale Gelenkachse 7 auf, an welcher rotierbar der erste Anschlussbereich 8 und der zweite Anschlussbereich 9 gelagert sind. Jeder der Anschlussbereiche 8, 9 dient des Weiteren zur Aufnahme eines Verbindungsmittels 10, 11. Hierzu können die Anschlussbereiche 8, 9 beispielsweise wie dargestellt Durchgangsöffnungen oder auch Nuten aufweisen, durch welche das jeweilige Verbindungsmittel 10, 11 hindurchgesteckt werden kann.

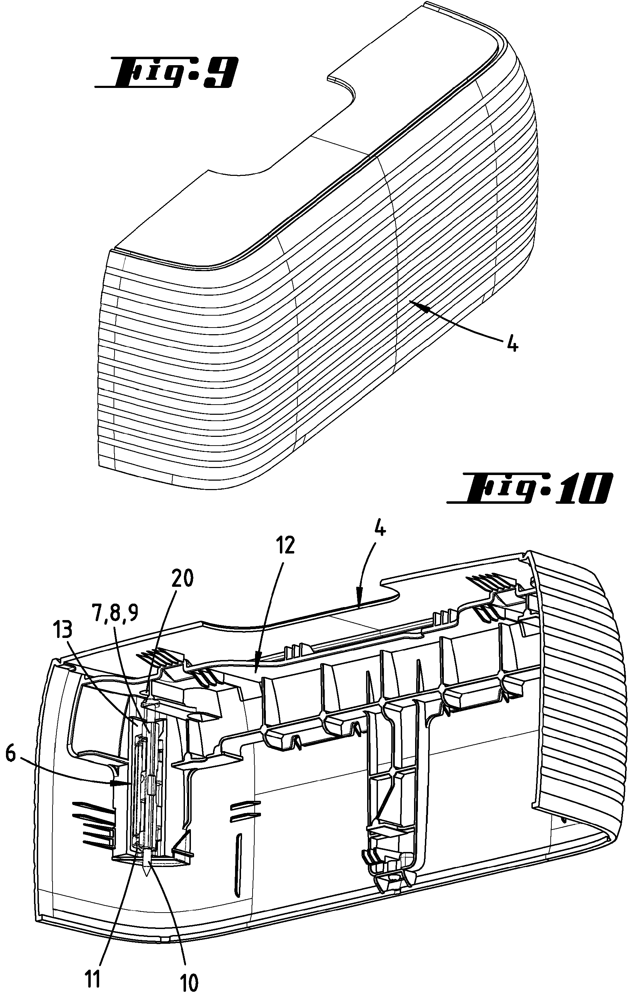

Die Figur 8 zeigt eine Anordnung eines Drehgelenks 6 in einem Eckbereich 19 des Trägerkörpers 12. Das Drehgelenk 6 ist dabei vollständig in der Aussparung 13 des Trägerkörpers 12 aufgenommen. In dieser Stellung kann das Verbindungsmittel 10 durch eine korrespondierende Öffnung 20 des Trägerkörpers 12 hindurch mit dem ersten Anschlussbereich 8 des Drehgelenkes 6 verbunden werden. Der zweite Anschlussbereich 9 wird in gleicher Art und Weise mittels des Verbindungsmittels 11 - wie in Figur 10 dargestellt - mit entsprechenden Gegenelementen auf einer Innenseite des Stoßfängers 4 verbunden.

### Liste der Bezugszeichen

| | | | |
|---|---|---|---|
| 1 | Bodenbearbeitungsgerät | r | Fortbewegungsrichtung |
| 2 | Grundkörper | | |
| 3 | Hindernisdetektionseinrichtung | | |
| 4 | Stoßfänger | | |
| 5 | Stoßsensor | | |
| 6 | Drehgelenk | | |
| 7 | Gelenkachse | | |
| 8 | Erster Anschlussbereich | | |
| 9 | Zweiter Anschlussbereich | | |
| 10 | Verbindungsmittel | | |
| 11 | Verbindungsmittel | | |
| 12 | Trägerkörper | | |
| 13 | Aussparung | | |
| 14 | Grundkörperfront | | |
| 15 | Grundkörperseite | | |
| 16 | Eckbereich | | |
| 17 | Federelement | | |
| 18 | Aussparung | | |
| 19 | Eckbereich | | |
| 20 | Öffnung | | |

## Patentansprüche

1. Selbsttätig verfahrbares Bodenbearbeitungsgerät (1) mit einem Grundkörper (2), einer Antriebseinrichtung und einer Hindernisdetektionseinrichtung (3) zur Detektion einer Kollision des Bodenbearbeitungsgerätes (1) mit einem Hindernis, wobei die Hindernisdetektionseinrichtung (3) einen in einer Vorstandslage an dem Grundkörper (2) angeordneten Stoßfänger (4) sowie mindestens einen dem Stoßfänger (4) zugeordneten Stoßsensor (5) aufweist, wobei der Stoßsensor (5) eingerichtet ist, eine Verlagerung des Stoßfängers (4) relativ zu dem Grundkörper (2) zu detektieren, wobei der Stoßfänger (4) über mindestens ein Drehgelenk (6) an dem Grundkörper (2) gelagert ist, wobei das Drehgelenk (6) eine Gelenkachse (7) aufweist, welche in einem auf einer zu bearbeitenden Fläche fahrenden Zustand des Bodenbearbeitungsgerätes (1) im Wesentlichen senkrecht zu der Fläche orientiert ist, wobei das Drehgelenk (6) zwei bezogen auf die Gelenkachse (7) radial gegenüberliegende Anschlussbereiche aufweist, von welchen ein erster Anschlussbereich drehbar an dem Grundkörper (2) angeordnet ist und von welchen ein zweiter Anschlussbereich drehbar an dem Stoßfänger (4) angeordnet ist, so dass der Stoßfänger (4) über drei Rotationsachsen an dem Grundkörper (2) gelagert und relativ zu diesem verlagerbar ist, wobei Rotationsbewegungen des Drehgelenks (6) und der Anschlussbereiche nur in einer einzigen horizontalen Ebene erfolgen und die drei Rotationsachsen des Drehgelenks (6) und der Anschlussbereiche so angeordnet sind, dass sie nicht entlang einer einzigen Linie positioniert werden können, **dadurch gekennzeichnet, dass** der Stoßfänger (4) über einen eine Aussparung (13) zur Aufnahme des Drehgelenks (6) aufweisenden Trägerkörper (12) an dem Grundkörper (2) angeordnet ist und dassdas Drehgelenk (6) unter Zwischenanordnung des Trägerkörpers (12) mit dem Grundkörper (2) verbunden ist, wobei ein, einen ersten Anschlussbereich (8) des Drehgelenks (6) mit dem Grundkörper (2) verbindendes Verbindungsmittel (10) gleichzeitig den Trägerkörper (12) mit dem Grundkörper (2) verbindet.

2. Bodenbearbeitungsgerät (1) nach Anspruch 1, **dadurch gekennzeichnet, dass** der jeweilige Anschlussbereich (8, 9) über ein, eine Rotationsachse bildendes Verbindungsmittel (10, 11) mit dem Grundkörper (2) oder dem Stoßfänger (4) verbunden ist, wobei das Verbindungsmittel (10, 11) parallel zu der Gelenkachse (7) des Drehgelenks (6) orientiert ist.

3. Bodenbearbeitungsgerät (1) nach Anspruch 2, **dadurch gekennzeichnet, dass** das Verbindungsmittel (10, 11) eine Schraube, ein Zylinderstift oder ein Niet ist.

4. Bodenbearbeitungsgerät (1) nach Anspruch 1, **dadurch gekennzeichnet, dass** die Aussparung (13) bei mit dem Trägerkörper (12) verbundenem Stoßfänger (4) durch den Stoßfänger (4) begrenzt ist.

5. Bodenbearbeitungsgerät (1) nach einem der vorhergehenden Ansprüche, **dadurch gekennzeichnet, dass** der Stoßfänger (4) und/oder der Trägerkörper (12) U-förmig ausgebildet ist, wobei der Stoßfänger (4) und/oder der Trägerkörper (12) bezogen auf eine übliche Fortbewegungsrichtung (r) des Bodenbearbeitungsgerätes (1) eine Grundkörperfront (14) und zumindest Teilbereiche zweier sich in jeweils einem Eckbereich (16) des Grundkörpers (2) an die Grundkörperfront (14) anschließender Grundkörperseiten (15) umfängt, und wobei jedem Eckbereich (16) des Grundkörpers (2) ein Drehgelenk (6) zugeordnet ist, so dass der Stoßfänger (4) in einer einzigen parallel zu der zu bearbeitenden Fläche orientierten Ebene sowohl parallel zu der üblichen Fortbewegungsrichtung (r), als auch quer dazu relativ zu dem Grundkörper (2) und/oder dem Trägerkörper (12) verlagerbar ist.

6. Bodenbearbeitungsgerät (1) nach einem der vorhergehenden Ansprüche, **dadurch gekennzeichnet, dass** der Grundkörper (2), der Stoßfänger (4) und/oder der Trägerkörper (12) mindestens ein Federelement (17) aufweist, dessen Rückstellkraft den Stoßfänger (4) von dem Grundkörper (2) zu beabstanden sucht.

## Claims

1. A self-propelled floor processing machine (1) with a base body (2),a driving device and an obstacle detection device (3) for detecting a collision between the floor processing machine (1) and an obstacle, wherein the obstacle detection device (3) has a bumper (4) arranged in a protruding position on the base body (2), as well as at least one impact sensor (5) allocated to the bumper (4), wherein the impact sensor (5) is configured to detect a displacement of the bumper (4) relative to the base body (2),wherein the bumper (4) is mounted to the base body (2) via at least one swivel joint (6), wherein the swivel joint (6) has a joint axis (7) oriented essentially perpendicular to the surface in a state of the floor processing machine (1) is oriented essentially perpendicular to the surface, wherein the swivel joint (6) has two connecting areas lying radially opposite each other in relation to the joint axis (7), of which a first connecting area is rotatably arranged on the base body (2), and of which a second connecting area is rotatably arranged on the bumper (4), so that the bumper (4) is mounted on the base body (2) via three axes of rotation and can be displaced relative to it, wherein rotational movements of the swivel joint (6) and the connection areas only take place in a single horizontal plane and the three axes of rotation of the swivel joint (6) and the connection areas are arranged in such a way that they cannot be positioned along a single line, **characterized in that** the bumper (4) is arranged on the base body (2) via a carrier body (12) having a recess (13) for accommodating the swivel joint (6) and that the swivel joint (6) is connected with the base body (2) with the carrier body (12) interspersed, wherein a connecting means (10) that connects a first connecting area (8) of the swivel joint (6) with the base body (2) simultaneously connects the carrier body (12) with the base body (2).

2. Floor processing machine (1) according to claim 1, **characterized in that** the respective connecting area (8, 9) is connected with the base body (2) or the bumper (4) via a connecting means (10, 11) that forms a rotational axis, wherein the connecting means (10, 11) is oriented parallel to the joint axis (7) of the swivel joint (6).

3. Floor processing machine (1) according to claim 2, **characterized in that** the connecting means (10, 11) is a screw, a cylinder pin or a rivet.

4. Floor processing machine (1) according to claim 1, **characterized in that** the recess (13) is bordered by the bumper (4) with the bumper (4) connected with the carrier body (12).

5. Floor processing machine (1) according to one of the preceding claims, **characterized in that** at least the bumper (4) and/or the carrier body (12) is U-shaped in design, wherein the bumper (4) and/or the carrier body (12) and encloses a base body front (14) and at least partial areas of two base body sides (15) adjoining the base body front (14) in a respective corner area (16) of the base body (2) in relation to a usual direction of movement (r) of the floor processing machine (1), and wherein each corner area (16) of the base body (2) has allocated to it a swivel joint (6), so that the bumper (4) can be displaced in a single plane oriented parallel to the surface to be processed, both parallel to the usual direction of movement (r), and also transversely thereto relative to the base body (2) and/or the carrier body (12).

6. Floor processing machine (1) according to one of the preceding claims, **characterized in that** base body (2), the bumper (4) and/or the carrier body (12) has at least one spring element (17), the reset force of which tries to space the bumper (4) apart from the base body (2).

## Revendications

1. Machine de travail du sol (1) à déplacement autonome, comprenant un corps de base (2), un dispositif d'entraînement et un dispositif de détection d'obstacles (3) pour détecter une collision de la machine de travail du sol (1) avec un obstacle, le dispositif de détection d'obstacles (3) comportant un pare-chocs (3) disposé en saillie sur le corps de base (2) disposé en saillie sur le corps de base (2) et au moins un capteur de choc (5) associé au pare-chocs (4), le capteur de choc (5) étant conçu pour détecter un déplacement du pare-chocs (4) par rapport au corps de base (2), le pare-chocs (4) étant monté sur le corps de base (2) par l'intermédiaire d'au moins une articulation pivotante (6), l'articulation pivotante (6) présentant un axe d'articulation (7) qui, lorsque la machine de travail du sol (1) est en état de déplacement sur une surface à travailler, est orienté sensiblement perpendiculairement à la surface, l'articulation pivotante (6) comportant deux zones de raccordement radialement opposées par rapport à l'axe d'articulation (7), dont une première zone de raccordement est montée de manière rotative sur le corps de base (2) et dont une deuxième zone de raccordement est montée de manière rotative sur le pare-chocs (4), de sorte que le pare-chocs (4) est monté sur le corps de base (2) par l'intermédiaire de trois axes de rotation et peut être déplacé par rapport à celui-ci, les mouvements de rotation de la rotule (6) et des zones de raccordement s'effectuant uniquement dans un seul plan horizontal et les trois axes de rotation de la rotule (6) et des zones de raccordement étant disposés de manière à ne pas pouvoir être positionnés le long d'une seule ligne, **caractérisé en ce que** le pare-chocs (4) est disposé sur le corps de base (2) par l'intermédiaire d'un corps de support (12) présentant un évidement (13) destiné à recevoir le joint tournant (6) et **en ce que** le joint tournant (6) est relié au corps de base (2) avec interposition du corps de support (12) en interposant le corps de support (12) avec le corps de base (2), un moyen de liaison (10) reliant, de maniè , une première zone de raccordement (8) du joint tournant (6) au corps de base (2) reliant en même temps le corps de support (12) au corps de base (2).

2. Machine de travail du sol (1) selon la revendication 1, **caractérisé en ce que** la zone de raccordement respective (8, 9) est reliée au corps de base (2) ou au pare-chocs (4) par l'intermédiaire d'un moyen de liaison (10, 11) formant un axe de rotation, le moyen de liaison (10, 11) étant orienté parallèlement à l'axe d'articulation (7) du joint tournant (6).

3. Machine de travail du sol (1) selon la revendication 2, **caractérisé en ce que** le moyen de liaison (10, 11) est une vis, une goupille cylindrique ou un rivet.

4. Machine de travail du sol (1) selon la revendication 1, **caractérisé en ce que** l'évidement (13) est délimité par le pare-chocs (4) lorsque celui-ci est relié au corps de support (12).

5. Machine de travail du sol (1) selon l'une des revendications précédentes, **caractérisé en ce que** le pare-chocs (4) et/ou le corps de support (12) est en forme de U, le pare-chocs (4) et/ou le corps de support (12) entourent, par rapport à une direction de déplacement habituelle (r) de la machine de travail du sol (1), une face avant (14) du corps de base et au moins des zones partielles de deux côtés (15) du corps de base qui se raccordent à la face avant (14) du corps de base dans une zone d'angle (16) respective du corps de base (2), et dans lequel une articulation pivotante (6) est associée à chaque zone d'angle (16) du corps de base (2), de sorte que le pare-chocs (4) peut être déplacé dans un seul plan parallèle à la surface à travailler, à la fois parallèlement à la direction de déplacement habituelle (r) et transversalement à celle-ci par rapport au corps de base (2) et/ou au corps de support (12).

6. Machine de travail du sol (1) selon l'une des revendications précédentes, **caractérisé en ce que** le corps de base (2), le pare-chocs (4) et/ou le corps de support (12) comportent au moins un élément élastique (17) dont la force de rappel tend à écarter le pare-chocs (4) du corps de base (2).
